(19) Europäisches Patentamt

European Patent Office

Office européen des brevets

(11) **EP 0 904 632 B1**

(12) **FASCICULE DE BREVET EUROPEEN**

(45) Date de publication et mention
de la délivrance du brevet:
**11.08.2004 Bulletin 2004/33**

(51) Int Cl.⁷: **H02P 6/10**

(21) Numéro de dépôt: **97927225.9**

(22) Date de dépôt: **03.06.1997**

(86) Numéro de dépôt international:
**PCT/FR1997/000975**

(87) Numéro de publication internationale:
**WO 1997/047079 (11.12.1997 Gazette 1997/53)**

(54) **DISPOSITIF DE COMMANDE DE MOTEUR ELECTRIQUE POUR DIRECTION ASSISTEE**

REGELVORRICHTUNG EINES ELEKTRISCHEN MOTORS FÜR EINE SERVOLENKUNG

ELECTROMOTOR CONTROL DEVICE FOR POWER STEERING

(84) Etats contractants désignés:
**DE ES GB IT**

(30) Priorité: **04.06.1996 FR 9606883**

(43) Date de publication de la demande:
**31.03.1999 Bulletin 1999/13**

(73) Titulaire: **Renault s.a.s.
92100 Boulogne Billancourt (FR)**

(72) Inventeurs:
• **DESBIOLLES, Pascal
F-74570 Thorens-Glières (FR)**
• **DINNEWETH, Laurent
F-31000 Toulouse (FR)**
• **LAJOIE-MAZENC, Michel
F-31450 Pompertuzat (FR)**
• **SAINT-MARTIN, Philippe
F-78800 Houilles (FR)**

(56) Documents cités:
**EP-A- 0 637 537        FR-A- 2 714 773**

• **JAHNS T M ET AL: "PULSATING TORQUE
MINIMIZATION TECHNIQUES FOR PERMANENT
MAGNET AC MOTOR DRIVES-A REVIEW" IEEE
TRANSACTIONS ON INDUSTRIAL
ELECTRONICS, vol. 43, no. 2, 1 avril 1996, pages
321-330, XP000592585**
• **YOSHIHIRO MURAI ET AL: "TORQUE RIPPLE
IMPROVEMENT FOR BRUSHLESS DC
MINIATURE MOTORS" IEEE TRANSACTIONS
ON INDUSTRY APPLICATIONS, vol. 25, no. 3, 1
mai 1989, pages 441-450, XP000039075**

**Description**

L'invention concerne les véhicules automobiles et, plus particulièrement, dans de tels véhicules, un dispositif pour commander le moteur électrique d'entraînement de l'arbre de direction du véhicule automobile.

De plus en plus souvent, les véhicules automobiles sont équipés d'une direction assistée qui est du type, soit hydraulique, soit électro-hydraulique, soit électrique.

Par rapport aux directions assistées, de type hydraulique ou électro-hydraulique, les directions assistées électriques présentent l'avantage de ne consommer de l'énergie que lorsqu'elles sont sollicitées par le conducteur, ce qui diminue la consommation de carburant. En outre, elles permettent de faire varier le gain d'assistance avec la vitesse du véhicule sans surcoût et de simplifier le montage du système de direction.

Des directions assistées électriques ont été installées sur des véhicules légers et utilisent toutes un moteur électrique à courant continu. Pour des véhicules plus lourds, le moteur électrique doit fournir un couple d'assistance plus grand, ce qui conduit à utiliser des moteurs volumineux et lourds qu'il est difficile de loger à proximité de la direction.

Il a donc été proposé d'utiliser des moteurs à commutation électronique qui ont une puissance massique (puissance par unité de masse) plus élevée et qui n'ont plus de collecteur balai. Un tel moteur à commutation électronique est par exemple décrit dans le brevet français N° 93 15941 publié sous le N° 2 714 773, ou encore dans la publication EP-0637537.

Les moteurs à commutation électronique pour direction assistée électrique correspondant à celui décrit dans le brevet précité présentent des modulations de couple qui sont ressenties au volant, de telles modulations peuvent avoir plusieurs origines telles que :

- le couple de détente du moteur,
- l'absence de chevauchement des F.E.M. trapézoïdales,
- les perturbations liées aux commutations des courants de phase à phase.

Les deux premiers points sont intrinsèques au moteur et il existe des solutions modifiant les inclinaisons des encoches du stator, en utilisant un nombre pair de pôles et par phases fractionnaires.

Le dernier point est abordé dans l'article IEEE Transactions on Industriel electronics Vol. 43 n° 2. Les solutions décrites ne permettent toutefois pas de traiter ces perturbations sur toute la plage de vitesse de rotation du moteur.

Il s'agit alors de contrôler à la fois le courant qui s'établit dans une phase, le courant qui s'annule dans l'autre et prendre en compte la saturation de consigne courant pour les vitesses élevées de rotation du moteur.

Le but de la présente invention est donc de réaliser un dispositif de commande d'un moteur à commutation électronique pour direction assistée électrique qui minimise les ondulations du couple d'assistance dans une large gamme de couple et de vitesse de rotation du moteur.

L'invention concerne un dispositif de commande d'un moteur triphasé à commutation électronique pour direction assistée électrique suivant la revendication 1.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma d'un système de direction assistée électrique mettant en oeuvre un dispositif de commande de moteur électrique selon l'invention ;
- la figure 2 est un schéma fonctionnel d'un dispositif de commande de moteur électrique pour direction assistée électrique selon l'invention ;
- la figure 3 est un schéma fonctionnel du dispositif d'élaboration du courant de référence auxiliaire pour la deuxième boucle de régulation du schéma de la figure 2 ;
- la figure 4 est un schéma simplifié du circuit d'alimentation à interrupteurs des enroulements de phase du moteur à commutation électronique ;
- la figure 5a est un diagramme montrant la conduction des phases du moteur à commutation électronique ;
- la figure 5b est un diagramme montrant le séquencement des interrupteurs d'alimentation des enroulements de phase du moteur à commutation électronique et correspondant à la boucle de régulation principale ;
- la figure 5c est un diagramme montrant le séquencement des interrupteurs d'alimentation commandés par la boucle de régulation auxiliaire ;
- la figure 5d est un diagramme montrant l'angle moteur $\theta$ ;
- la figure 5e est un diagramme montrant les séquences ;
- les figures 5f, 5g et 5h sont des diagrammes montrant schématiquement les allures théoriques des courants dans les différents enroulements de phase du moteur à commutation électronique ;
- la figure 6a est un schéma identique à celui de la figure 4 montrant la séquence de conduction dans les phases 1 et 3, et
- la figure 6b est un schéma identique à celui de la figure 4 montrant la séquence de conduction dans les phases 2 et 3 alors que le courant dans la phase 1 n'est pas encore nul.

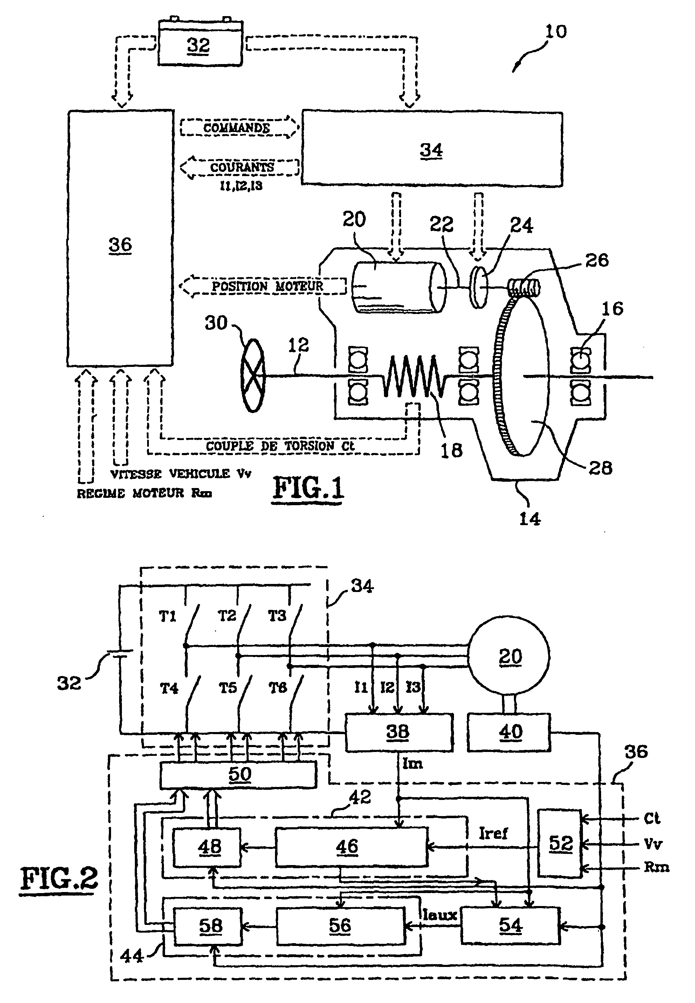

Un système de direction assistée électrique 10 comprend (figure 1) une colonne de direction 12 qui est fixée sur un tube de colonne 14 par l'intermédiaire de bagues 16. La colonne de direction 12 est reliée, d'un côté au volant 30 du véhicule et, de l'autre, aux roues avant par l'intermédiaire d'une crémaillère (non représentée). La colonne de direction 12 est équipée d'une barre de torsion 18 associée à un capteur du couple de torsion Ct (non représentée). L'assistance électrique est réalisée par un moteur électrique 20 dont l'arbre de sortie 22 entraîne la colonne de direction 12, côté crémaillère, par l'intermédiaire d'un embrayage 24, d'une vis sans fin 26 engrenant une roue dentée 28 solidaire de la colonne de direction 12.

Le moteur électrique 20 est alimenté par une batterie d'accumulateurs par l'intermédiaire d'un circuit de commutation 34 dont les interrupteurs T1 à T6 (figure 2) sont commandés par les signaux fournis par un circuit de commande 36. Ce circuit de commande 36 élabore les signaux de commande des interrupteurs T1 à T6 à partir des éléments suivants :

- de l'intensité du courant du moteur 20,
- de la position du rotor du moteur 20,
- du couple de torsion Ct de la colonne de direction 12,
- de la vitesse Vv du véhicule,
- du régime Rm du moteur du véhicule.

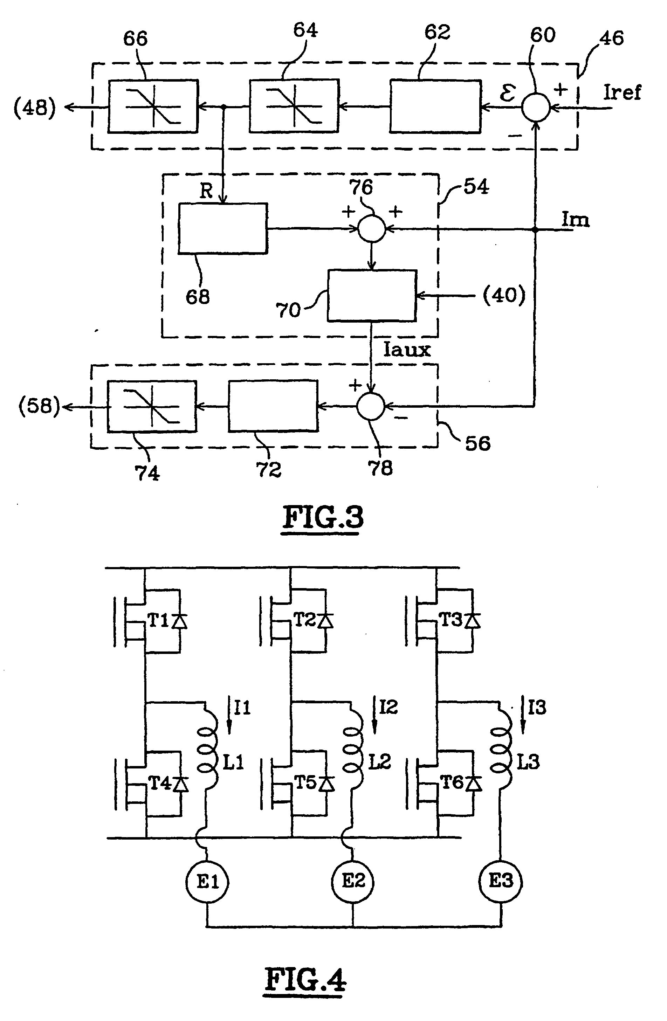

Les interrupteurs T1 à T6 du circuit de commutation 34 sont connectés deux à deux en série aux bornes de la batterie 32 et le point commun de chaque couple est connecté à un enroulement L1, L2 et L3 (figure 4) du stator du moteur. Les courants I1, I2 et I3 dans les enroulements L1, L2 et L3 sont mesurés par un circuit 38 indiquant un courant Im et la position du rotor est mesurée par un codeur angulaire 40.

Le circuit de commande 36 comprend, d'une part de manière classique, une première boucle de régulation dite principale 42 et, d'autre part, selon l'invention, une deuxième boucle de régulation dite auxiliaire.

La boucle de régulation principale 42 comprend un modulateur d'impulsions en durée ou largeur 46 qui fournit un signal modulé en largeur ou durée dont la modulation est une fonction de la différence entre le courant mesuré Im dans le moteur et un courant de référence Iref déterminé dans un calculateur 52 par le couple de torsion Ct, la vitesse Vv du véhicule et le régime Rm du moteur du véhicule. C'est ce signal modulé qui détermine les durées d'ouverture et de fermeture des interrupteurs T1 à T6.

Les interrupteurs qui doivent être activés sont sélectionnés par un sélecteur 48 en fonction des informations de position fournies par le codeur angulaire 40 et les signaux qu'il fournit, modulés en largeur, sont appliqués aux interrupteurs T1 à T6 par l'intermédiaire d'un circuit de puissance 50.

La boucle de régulation auxiliaire 44 comprend, de manière similaire à la boucle de régulation principale, un modulateur d'impulsions en largeur 56 et un sélecteur 58 commandé par les informations de position du rótor. Cependant, le courant de référence Iref du modulateur est remplacé par un courant auxiliaire Iaux qui est déterminé par un circuit 54 à partir du courant mesuré Im, de l'erreur de la boucle de régulation principale et de l'information de position, fournie par le codeur angulaire 40, comme cela sera expliqué en relation avec la figure 3. Les signaux fournis par le sélecteur 58, modulés en largeur, sont appliqués aux interrupteurs T1 à T6 par l'intermédiaire du circuit de puissance 50.

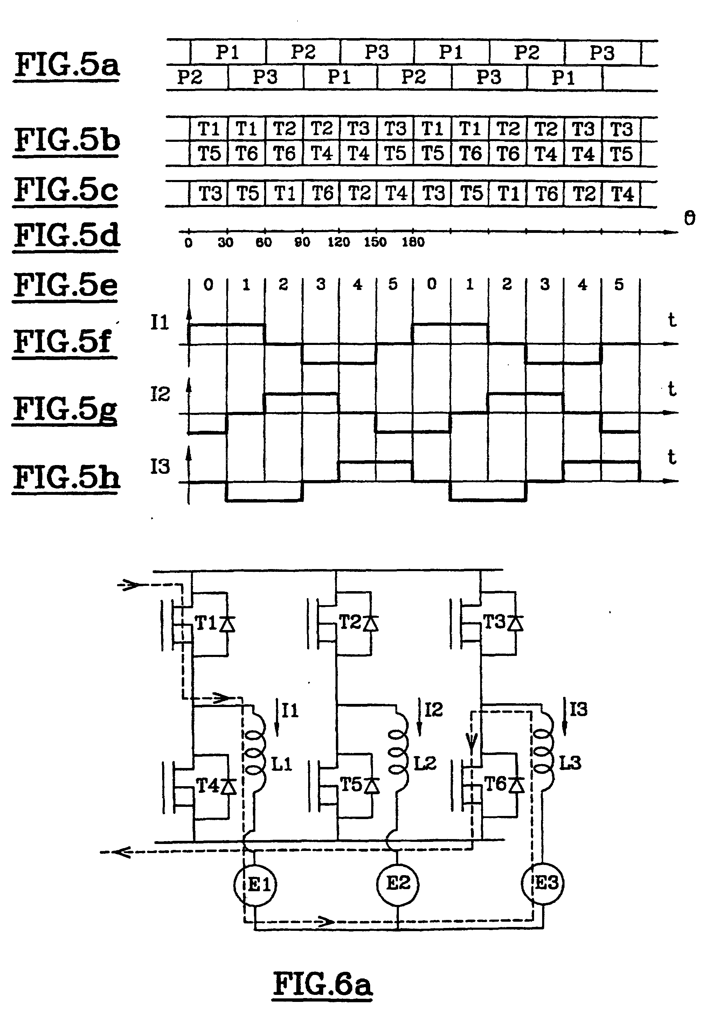

Le fonctionnement de la boucle de régulation principale 42 sera expliqué à l'aide des figures 4, 5a, 5b et 5d à 5h en supposant que le moteur est du type décrit dans le brevet précité et comprend deux paires de pôles au rotor et trois enroulements de phase L1, L2 et L3 au stator parcourus chacun respectivement par des courants I1, I2 et I3. Les enroulements de phase L1, L2, L3 sont le siège de forces électromotrices E1, E2 et E3. Il est à noter que les diagrammes des figures 5a à 5h correspondent à un couple de signe positif.

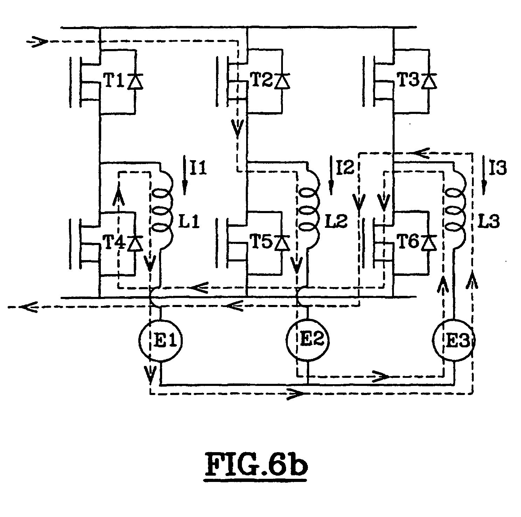

Sur la figure 4 et les figures 6a et 6b, les interrupteurs T1 à T6 ont été représentés par des transistors de type à effet de champ réalisés en technologie MOS (pour l'acronyme anglo-saxon Metal Oxide Semiconductor) et connus sous la dénomination MOSFET. Dans cette technologie, chaque transistor présente une diode en parallèle.

Les transistors T1 à T6 sont commutés pour obtenir dans chaque enroulement de phase les courants I1, I2 et $I_3$ dont les formes d'ondes sont représentées respectivement sur les diagrammes des figures 5, 5f, 5g et 5h. Ces formes d'ondes théoriques déterminent la succession des phases P1, P2 et P3 selon le diagramme de la figure 5a et le séquencement des interrupteurs T1 à T6 selon le diagramme de la figure 5b. Ainsi, pour obtenir les courants de l'intervalle "1" (figure 5e) correspondant à $30° < θ < 60°$ (figure 5d), il faut que les interrupteurs T1 et T6 soient fermés (conducteurs) de sorte qu'un courant I1 circule dans l'enroulement L1 (voir le trajet de courant sur figure 6a) et qu'un courant I3 = - I1 circule dans l'enroulement L3, ; aucun courant I2 ne circule dans l'enroulement L3 car on doit toujours avoir :

$$I1 + I2 + I3 = 0.$$

De manière similaire, pour obtenir les courants I2 et I3 de l'intervalle "2", il faut que T2 et T6 soient conducteurs et on obtient le trajet de la figure 6b.

Pour l'intervalle suivant "3", les interrupteurs T2 et T4 sont conducteurs et des courants I1 et I2 circulent.

Pour différentes raisons, les formes d'ondes des figures 5f, 5g et 5h ne peuvent être obtenues car les courants dans les enroulements ne peuvent pas varier instantanément et il en résulte des ondulations de courant et donc de couple qui se répercutent sur le volant de la direction.

Ainsi, à faible vitesse de rotation du moteur électrique ou en fonctionnement en génératrice de la machine, la dynamique du courant qui s'établit est plus grande que celle du courant qui s'annule. La somme des courants (I1 + I2 + I3) étant nulle, le courant non commuté présente une variation qui engendre une variation du couple. En boucle ouverte, la boucle de régulation principale 46 corrige cette variation.

A vitesse élevée de rotation du moteur électrique, la pente du courant qui s'annule est plus grande que celle du courant qui s'établit du fait de la forte valeur de la force électromotrice, il y a donc apparition d'une variation du courant non commuté de sens opposé au cas de la faible vitesse de rotation. Cette variation est corrigée, selon la présente invention, en mettant en oeuvre une seconde boucle de régulation dite auxiliaire qui permet de contrôler la descente du courant dans la phase qui n'est plus alimentée.

Cette boucle de régulation dite auxiliaire introduit une commutation supplémentaire sur un troisième interrupteur alors que la boucle de régulation principale agit sur deux interrupteurs comme le montrent les diagrammes des figures 5b et 5c.

La conduction du troisième interrupteur a pour but de ralentir, pour des vitesses élevées de rotation, la décroissance du courant qui s'annule, par exemple le courant I1 pour l'intervalle "2", ce qui signifie qu'il faut intervenir sur la conduction de l'interrupteur T1, lorsque les interrupteurs T2 et T6 sont conducteurs de manière à réduire le courant dans l'enroulement L1.

Pour les autres couples d'interrupteurs, le troisième interrupteur est :

- l'interrupteur T6 pour le couple T2, T4 (intervalle "3"),
- l'interrupteur T2 pour le couple T3, T4 (intervalle "4"),
- l'interrupteur T4 pour le couple T3, T5 (intervalle "5"),
- l'interrupteur T3 pour le couple T1, T5 (intervalle "0"),
- l'interrupteur T5 pour le couple T1, T6 (intervalle "1").

La durée de conduction de ce troisième interrupteur est obtenue par un régulateur modulateur 56, analogue au régulateur modulateur 46. Ce régulateur modulateur 46 fonctionne quand la commande du régulateur modulateur 56 est saturée. Mais si cette seconde boucle de régulation utilise le courant Iref comme référence, alors, à partir d'une certaine vitesse de rotation du moteur et pour une tension d'alimentation donnée, le courant ne peut plus atteindre la valeur de consigne. Ceci a pour effet de déphaser le courant par rapport à la force contre électromotrice, de sorte que le couple décroît alors très rapidement.

Pour pallier cet inconvénient, l'invention propose d'appliquer à cette boucle de régulation un courant de consigne auxiliaire Iaux. Ce courant de consigne auxiliaire permet de maintenir un niveau de courant dans le moteur de manière que les commutations durent 60° électrique.

La valeur du courant de consigne auxiliaire Iaux est élaboré à partir de la mesure du courant qui s'établit à chaque début de conduction de phase, l'instant de début étant déterminé par le codeur angulaire 40. A cette valeur mesurée du courant, on ajoute la valeur d'erreur ε de la boucle principale pour obtenir Iaux. Le circuit qui permet d'élaborer Iaux sera décrit en relation avec la figure 3.

Sur la figure 3, on a représenté schématiquement les modulateurs 46 et 56 qui élaborent les signaux de modulation en largeur des deux boucles de régulation ainsi que le circuit 54 qui fournit le courant de référence auxiliaire Iaux.

Le circuit 54 comprend un circuit diviseur 68 par un coefficient G égal au gain de la boucle principale de régulation et auquel est appliqué un signal R fourni par la boucle principale. Il comprend également un circuit additionneur 76 qui reçoit, d'une part, le signal R/G fourni par le circuit diviseur 68 et, d'autre part, le signal Im. Enfin, un circuit d'échantillonnage à mémoire 70, auquel est appliqué le signal résultant de l'addition (R/G + Im), permet de garder en mémoire la valeur (R/G + Im) à chaque instant de commutation déterminé par le codeur angulaire 40. C'est cette valeur (R/G + Im) à l'instant d'échantillonnage qui constitue la valeur Iaux appliquée à la boucle de régulation auxiliaire 56. Plus précisément, cette valeur Iaux est appliquée à une entrée d'un comparateur 78 dont l'autre entrée reçoit la valeur Im du courant. C'est la différence (Iaux - Im) qui est utilisée dans un régulateur Proportionnel-Intégral 72 et un modulateur 74 pour fournir le signal de modulation du troisième interrupteur à commuter.

Le signal R est dérivé de la boucle principale 46 qui comprend un comparateur 60 dont une entrée reçoit le signal Iref et dont l'autre entrée reçoit le signal Im. La différence ε = Iref - Im est appliquée à un régulateur 62 du type Proportionnel-Intégral suivi d'un amplificateur à saturation 64. C'est le signal de sortie du régulateur 62 après saturation dans l'amplificateur 64 qui constitue le signal R = G.ε appliqué, d'une part, au circuit diviseur 68 et à l'amplificateur à saturation 66.

Le fonctionnement est alors le suivant. Lorsque la valeur de ε est faible, c'est-à-dire lorsque la durée de commutation est inférieure à 60°, la valeur de R est égale à G.ε de sorte qu'à la sortie du circuit additionneur 76, on a Iaux = ε + Im = Iref. Par contre, lorsque la durée de commutation est supérieure à 60°, la valeur ε est élevée et le régulateur est saturé, il en résulte que la division de R par G dans le circuit diviseur 68 donne une valeur inférieure à ε de sorte que Iaux est inférieure à Iref. Ceci a pour conséquence de modifier la modulation du troisième interrupteur dans le sens souhaité de manière que le courant qui décroît soit nul au moment de la commutation, c'est-à-dire à 60° électrique ou 30° mécanique.

L'invention a été décrite avec un moteur sans balai à trois phases et 2 paires de pôles, ce qui correspond à une durée de conduction des phases de 60° électrique ou 30° mécanique mais elle s'applique à d'autres réalisations de ce type de moteur telles que 3 phases et 3 paires de pôles.

## Revendications

1. Dispositif de commande d'un moteur polyphasé à commutation électronique pour direction assistée électrique de véhicule automobile comprenant :

   - un circuit de commutation (34) des courants (I1, 12, 13) dans les enroulements (L1, L2, L3) de phase du moteur comportant une pluralité d'interrupteurs (T1 à T6),

   - un circuit de commande (36) du circuit de commutation (34) qui fournit séquentiellement des signaux de commutation de deux des interrupteurs (T1 à T6) du circuit de commutation (34) pour alimenter deux enroulements de phase, lesdits signaux de commutation étant modulés en largeur/durée, par l'intermédiaire d'un courant de consigne déterminé dans un calculateur,

   **caractérisé en ce que** ledit circuit de commande (36) comprend deux boucles de régulation (42, 44), la deuxième boucle de régulation dite auxiliaire (44) possédant un courant de consigne diffèrent de celui de la première boucle de régulation dite principale (42) et fournissant séquentiellement des signaux de commutation d'un troisième interrupteur (T1 à T6) pour alimenter le troisième enroulement de phase.

2. Dispositif selon la revendication 1, **caractérisé en ce que** :

   - la première boucle de régulation (42) est asservie à une valeur de référence (Iref) fournie par un calculateur (52) en fonction des valeurs du couple de torsion (Ct) de la colonne de direction (12), de la vitesse (Vv) du véhicule automobile et du régime moteur (Rm),
   - la deuxième boucle de régulation (44, 54) est asservie à une valeur de référence auxiliaire (Iaux) fournie par un dispositif (54) en fonction du courant (Im) mesuré dans les enroulements de phase, de la position angulaire (θ), du rotor du moteur et de la valeur (ε, R) de l'erreur de la première boucle de régulation.

3. Dispositif selon la revendication 2, **caractérisé en ce que** le dispositif (54) fournissant la valeur de référence auxiliaire (Iaux) comprend :

   - un circuit diviseur (68) qui divise la valeur d'érreur amplifiée (R) de la première boucle de régulation par le gain (G) de ladite boucle,
   - un circuit additionneur (76) pour additionner la valeur fournie par le circuit diviseur (68) à la valeur mesurée (Im) du courant du moteur, et
   - un circuit mémoire (70) pour mémoriser la valeur résultant de l'addition à chaque instant de commutation de phase, la valeur mémorisée étant la valeur de référence auxiliaire (Iaux) de la deuxième boucle de régulation.

## Patentansprüche

1. Vorrichtung zur Steuerung eines Mehrphasenmotors mit elektronischer Kommutation für die elektrische Servolenkung eines Kraftfahrzeugs, umfassend:

   - eine Kommutationsschaltung (24), der Ströme (I1, I2, 13) in den Phasenwicklungen (L1, L2, L3) des Motors, welche eine Vielzahl von Schaltern (T1 bis T6) aufweist;
   - einen Steuerschaltkreis (36) der Kommutationsschaltung (34), der sequentiell Schaltsignale von zweien der Schalter (T1 bis T6) der Kommutationsschaltung (34) liefert, um zwei Phasenwicklungen zu versorgen, wobei die Schaltsignale in der Breite/Dauer mittels eines Referenzstroms moduliert werden, der in einem Rechner bestimmt werden,

   **dadurch gekennzeichnet, dass** der Steuerschaltkreis (36) zwei Regelkreise (42, 44) umfasst, wobei der zweite Regelkreis (44), Hilfskreis genannt, einen Referenzstrom aufweist, der verschieden ist von demjenigen des ersten Regelkreises (42), Hauptkreis genannt, und sequentiell Schaltsignale eines dritten Umschalters (T1 bis T6) liefert, zum Versorgen der dritten Phasenwicklung.

2. Vorrichtung nach Anspruch 1, **dadurch gekennzeichnet, dass**:

   - der erste Regelkreis (42) einem Referenzwert (Iref) unterworfen ist, der durch einen Rechner (52) geliefert wird, abhängig von den Werten des Torsionsmoments (Ct) der Lenksäule (12), der Geschwindigkeit (Vv) des Kraftfahrzeugs und von der Drehzahl des Motors (Rm),
   - der zweite Regelkreis (44, 54) einem zusätzlichen Referenzwert (I-aux) unterworfen ist, der durch eine Vorrichtung (54) geliefert wird, abhängig von dem in den Phasenwicklungen gemessenen Strom (Im), der Winkelposition (θ) des Rotors und des Wertes (ε, R) des Fehlers des ersten Regelkreises.

3. Vorrichtung nach Anspruch 2, **dadurch gekennzeichnet, dass** die Vorrichtung (54), welche den zusätzlichen Referenzwert (Iaux) liefert, umfasst:

   - einen Divisionsschaltkreis (68), welcher den verstärkten Fehlerwert (R) des ersten Regelkreises durch die Steigerung (G) des Kreises dividiert,
   - einen Additionsschaltkreis (76) zum Addieren des durch den Divisionsschaltkreis (68) gelieferten Wertes zum gemessenen Wert (Im) des Motorstroms, und
   - einen Speicherschaltkreis (70) zum Speichern des aus der Addition resultierenden Wertes bei jedem Ereignis einer Phasenumschaltung, wobei der gespeicherte Wert der zusätzliche Hilfswert (Iaux) des zweiten Regelkreises ist.

**Claims**

1. A control device for a multi-phase electronic commutator motor for electric assisted steering of an automobile vehicle, comprising:

   - a switching circuit (34) for the currents (I1, I2, I3) in the phase windings (L1, L2, L3) of the motor comprising a plurality of switches (T1 to T6),
   - a control circuit (36) for the switching circuit (34) which sequentially supplies switching signals of two of the switches (T1 to T6) of the switching circuit (34) in order to supply two phase windings, the switching signals being width/duration modulated, by means of a reference current determined in a computer, **characterised in that** the control circuit (36) comprises two regulation loops (42, 44), the second, so-called auxiliary, regulation loop (44) having a reference current different from that of the first, so-called main, regulation loop (42) and sequentially supplying the switching signals of a third switch (T1 to T6) to supply the third phase winding.

2. A device as claimed in claim 1, **characterised in that**:

   - the first regulation loop (42) is subject to a reference value (Iref) supplied by a computer (52) as a function of the torsional couple values (Ct) of the steering column (12), the speed (Vv) of the automobile vehicle and the engine speed (Rm),
   - the second regulation loop (44, 54) is subject to an auxiliary reference value (Iaux) supplied by a device (54) as a function of the current (Im) measured in the phase windings, the angular position (θ) of the rotor of the motor and the value (ε, R) of the error of the first regulation loop.

3. A device as claimed in claim 2, **characterised in that** the device (54) supplying the auxiliary reference value (Iaux) comprises:

   - a divider circuit (68) which divides the amplified error value (R) of the first regulation loop by the gain (G) of this loop,
   - an adder circuit (76) adapted to add the value supplied by the divider circuit (68) to the measured value (Im) of the current of the motor,
   - a memory circuit (70) adapted to memorise the value resulting from the addition at each instant of phase switching, the memorised value being the auxiliary reference value (Iaux) of the second regulation loop.

COMMANDE

COURANTS
I1,I2,I3

POSITION MOTEUR

COUPLE DE TORSION Ct

VITESSE VEHICULE Vv
REGIME MOTEUR Rm

**FIG.1**

**FIG.2**

**FIG.3**

**FIG.4**

**FIG.5a**

| | P1 | | P2 | | P3 | | P1 | | P2 | | P3 | |
|---|---|---|---|---|---|---|---|---|---|---|---|---|
| P2 | | P3 | | P1 | | P2 | | P3 | | P1 | | |

**FIG.5b**

| | T1 | T1 | T2 | T2 | T3 | T3 | T1 | T1 | T2 | T2 | T3 | T3 |
|---|---|---|---|---|---|---|---|---|---|---|---|---|
| | T5 | T6 | T6 | T4 | T4 | T5 | T5 | T6 | T6 | T4 | T4 | T5 |

**FIG.5c**

| | T3 | T5 | T1 | T6 | T2 | T4 | T3 | T5 | T1 | T6 | T2 | T4 |
|---|---|---|---|---|---|---|---|---|---|---|---|---|

**FIG.5d** $\theta$

0   30   60   90   120   150   180

**FIG.5e**

**FIG.5f**

**FIG.5g**

**FIG.5h**

**FIG.6a**

**FIG.6b**